# EUROPEAN PATENT APPLICATION

(11) **EP 4 615 102 A1**
(43) Date of publication of application: **10.09.2025**
(21) Application number: 24855452.9
(22) Date of filing: 24.06.2024
(51) Int. Cl.: H04W 72/0446

(54) **TRANSMISSION METHOD, COMMUNICATION NODE, AND STORAGE MEDIUM**

(30) Priority: 18.08.2023 CN 202311051973
(71) Applicant: ZTE Corporation, Shenzhen, Guangdong 518057 (CN)
(72) Inventor: LU, Youxiong, Shenzhen, Guangdong 518057 (CN); XING, Weimin, Shenzhen, Guangdong 518057 (CN); BI, Feng, Shenzhen, Guangdong 518057 (CN); MIAO, Ting, Shenzhen, Guangdong 518057 (CN)
(74) Representative: Aipex B.V.
(86) International application number: PCT/CN2024/100946
(87) International publication number: WO 2025/039723

(57) **Abstract**

Provided are a transmission method, a communication node, and a storage medium. The method includes: determining target start symbols in a slot within a resource pool, where the target start symbols include a first start symbol and a second start symbol; calculating an actual channel coding rate of a transport block, TB, in a case where the TB is transmitted starting from the second start symbol; and determining transmission at the second start symbol according to the actual channel coding rate and a threshold.

## Description

### TECHNICAL FIELD

The present application relates to the field of radio communication technology, for example, a transmission method, a communication node, and a storage medium.

### BACKGROUND

In a sidelink communication system, when services need to be transmitted between user equipments (UEs), service data between UEs may not be forwarded at a network side but is directly transmitted by a data source UE to a target UE through a sidelink. The sidelink works in an unlicensed spectrum. A UE may access a resource allocated by a base station or autonomously selects a resource. To transmit, for example, a control message and data information, a time-frequency resource allocated or selected by the sidelink UE starts from a symbol in the time domain, lasts for a specific quantity of symbols, and occupies a specific quantity of resource blocks (RBs) at frequency-domain specific positions in the frequency domain. Generally, the UE only needs to attempt channel access according to a selected channel access manner before an actually transmitted symbol, and only one channel access and transmission opportunity exists. To increase channel access and transmission opportunities, one UE may be allowed to start information transmission from two start symbols; that is, the UE may attempt channel access and transmission at two symbols. However, there is no effective solution at present to determine the validity of a transmission opportunity and an actual channel transmission coding rate, thereby failing to guarantee communication reliability.

### SUMMARY

The present application provides a data transmission method, a communication node, and a storage medium.

Embodiments of the present application provide a transmission method. The method includes the following.

Target start symbols in a slot within a resource pool are determined, where the target start symbols comprise a first start symbol and a second start symbol.

An actual channel coding rate of a transport block (TB) is calculated in a case where the TB is transmitted starting from the second start symbol.

Transmission at the second start symbol is determined according to the actual channel coding rate and a threshold.

Embodiments of the present application further provide a communication node. The communication node includes a memory, a processor, and a computer program stored in the memory and executable by the processor. When executed by the processor, the program causes the processor to perform the preceding transmission method.

Embodiments of the present application further provide a computer-readable storage medium for storing a computer program. When the program is executed by a processor, the preceding transmission method is performed.

### BRIEF DESCRIPTION OF DRAWINGS

FIG. 1 is a flowchart of a transmission method according to an embodiment.
FIG. 2 is a structure diagram of a transmission apparatus according to an embodiment.
FIG. 3 is a structure diagram of a hardware of a communication node according to an embodiment.

### DETAILED DESCRIPTION

The present application is described hereinafter in conjunction with the drawings and embodiments. It is to be understood that the embodiments described herein are intended to explain the present application and not to limit the present application. It is to be noted that if not in collision, embodiments of the present application and features therein may be combined with each other in any manner. Additionally, it is to be noted that for ease of description, only part, not all, of structures related to the present application are illustrated in the drawings.

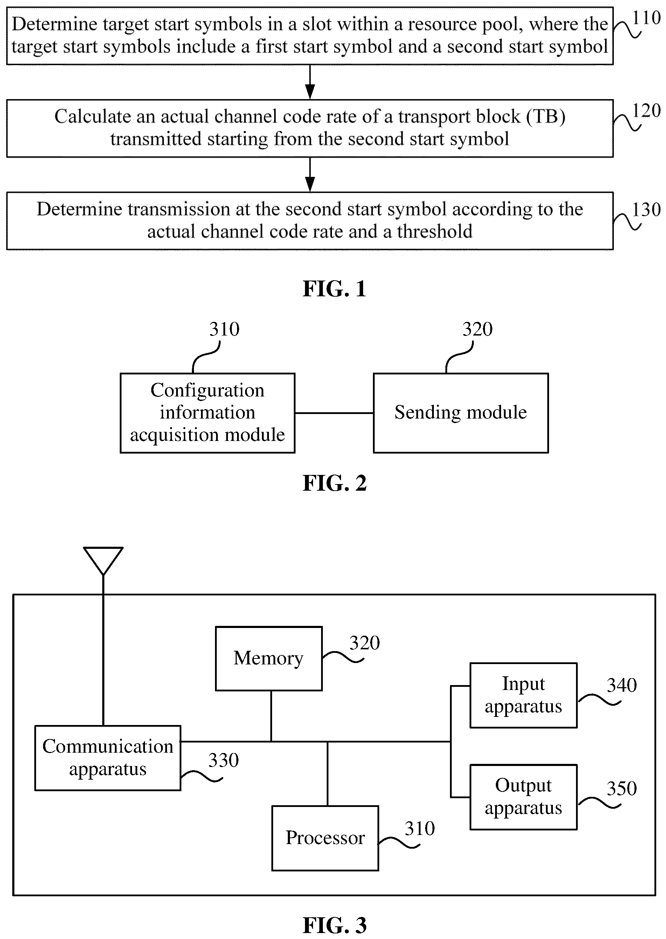

FIG. 1 is a flowchart of a transmission method according to an embodiment. The method may be applied to a communication node in a sidelink, for example, a UE. As shown in FIG. 1, the method provided in this embodiment includes 110, 120, and 130.

In 110, target start symbols in a slot within a resource pool are determined, where the target start symbols include a first start symbol and a second start symbol.

In 120, an actual channel coding rate of a transport block (TB) is calculated in a case where the TB is transmitted starting from the second start symbol.

In 130, transmission at the second start symbol is determined according to the actual channel coding rate and a threshold.

In this embodiment, before actual information transmission, the communication node first attempts channel access on the allowed first start symbol. If channel access succeeds, data symbol mapping will be performed from the first start symbol on which channel access succeeds, and information (also referred to as data) will be transmitted. If channel access fails on the first start symbol, channel access may be attempted on the second start symbol; and if channel access succeeds, information will be transmitted. The TB size may be determined according to the number of configured or preconfigured parameter symbols. During actual information transmission, the number of symbols actually used for transmission may be different from the number of parameter symbols.

The communication node may determine the TB size according to the preconfigured or configured parameter symbols. In the process of physical channel processing, because the number of second start symbols is smaller than the number of first start symbols or may be less than the number of parameter symbols, it may result in an excessively high actual channel coding rate, for example, greater than a threshold of 0.95. In this case, a receiving end cannot correctly receive information or data even after the information or data is sent, and radio spectrum resources are wasted. According to the method in this embodiment, before channel access or information transmission, the communication node may calculate the actual channel coding rate to determine, according to the threshold, whether to perform channel access and information transmission at the second start symbol, thereby saving radio spectrum resources, reducing the processing complexity and energy consumption of the communications node, and reducing interference in a communications system.

In an embodiment, the actual channel coding rate is defined as the number of bits of information transmitted via a sidelink divided by the number of bits actually available for mapping on a physical shared channel.

In an embodiment, that the transmission at the second start symbol is determined according to the actual channel coding rate and the threshold includes the following.

In the case where the actual channel coding rate is lower than or not higher than the threshold, determining the transmission at the second start symbol includes performing channel access at the second start symbol.

In an embodiment, that the transmission at the second start symbol is determined according to the actual channel coding rate and the threshold includes the following.

In the case where the actual channel coding rate is lower than or not higher than the threshold, determining the transmission at the second start symbol includes starting to transmit information from the second start symbol in the case where channel access at the second start symbol succeeds.

In an embodiment, that the transmission at the the second start symbol is determined according to the actual channel coding rate and the threshold includes the following.

In the case where the actual channel coding rate is not lower than or higher than the threshold, determining the transmission at the second start symbol includes abandoning performing channel access at the second start symbol.

In an embodiment, that the transmission at the second start symbol is determined according to the actual channel coding rate and the threshold includes the following.

In the case where the actual channel coding rate is not lower than or higher than the threshold, determining the transmission at the second start symbol includes abandoning information transmission from the second start symbol in the case where channel access at the second start symbol succeeds.

In an embodiment, that the transmission at the second start symbol is determined according to the actual channel coding rate and the threshold includes the following.

In the case where the actual channel coding rate is not lower than or higher than the threshold, determining the transmission at the second start symbol includes invalidating the second start symbol for transmission.

In an embodiment, the method further includes the following.

The resource scheduling indication information of a medium access control (MAC) layer is received, where the resource scheduling indication information includes a modulation and coding scheme (MCS) and the TB, and the MCS includes at least one modulation order.

In an embodiment, an actual channel coding rate of the TB transmitted at the second start symbol is not expected to be higher than or not lower than the threshold, where the actual channel coding rate corresponds to the MAS and the TB indicated by the resource scheduling indication information.

In an embodiment, the information includes at least one of: a control message, shared channel information, a feedback message, a broadcast message, a multicast message, or a unicast message.

In an embodiment, the actual channel coding rate of the TB transmitted starting from the second start symbol is an actual channel coding rate of the initial transmission of the TB or an actual channel coding rate of the retransmission of the TB.

In an embodiment, the threshold is predefined, preconfigured, configured, or indicated by a system.

In an embodiment, the first start symbol is a first available symbol in the slot.

In an embodiment, the second start symbol is an available start symbol other than a first available symbol in the slot.

The preceding transmission method is exemplarily described hereinafter with specific embodiments or examples.

### Embodiment one

In this embodiment, when the actual channel coding rate of the TB transmitted starting from the second start symbol meets the condition corresponding to the threshold, the UE may abandon channel access at the second start symbol.

The UE receives resource pool configuration or pre-configuration information and determines allowed start symbols in the slot within the current resource pool and the number of the allowed start symbols; then the UE receives the MCS and the TB that are indicated by the MAC and performs physical channel processing; moreover, the UE calculates the actual channel coding rate of the TB transmitted starting from the second starting symbol and judges whether the actual channel coding rate is higher than or not lower than a configured (or preconfigured) or predefined threshold. If it is judged that the actual channel coding rate is higher than or not lower than the threshold, the UE will abandon channel access at the second start symbol. The MCS includes the modulation order which is denoted as Q. The actual channel coding rate is defined as the number of bits (including cyclic redundancy check (CRC) bits) of information transmitted via the sidelink divided by the number of bits actually available for mapping on the physical shared channel. The second start symbol is an available start symbol other than the first available symbol in the current slot.

The transmitted information or data includes at least one of: a control message, shared channel information, a feedback message, a broadcast message, a multicast message, or a unicast message.

Example one (Two start symbols are allowed in the resource pool configuration)

The UE receives the resource pool configuration or pre-configuration information and determines allowed start symbols in the slot within the current resource pool and the number of the allowed start symbols. For example, the configuration information in a bandwidth part (BWP) of the current sidelink indicates that a start symbol for sidelink transmission is symb0 and that the number of symbols is 14. Moreover, a resource pool parameter or a BWP parameter further indicates that the second start symbol is symb5. The preceding configuration indicates that two start symbols are allowed in the slot within the current resource pool. The first start symbol is symb0, and the second start symbol is symb5.

The UE receives the resource scheduling information indicated by the MAC, for example, the MCS and the TB, and performs physical channel processing including CRC calculation and addition, code block partitioning and concatenation, and channel coding such as the low density parity check code (LDPC)/polar code, and rate matching.

The UE calculates the number of actually available symbols according to the first start symbol and performs the preceding physical channel processing on the sent TB. Moreover, the UE attempts channel access before the first start symbol. If channel access succeeds, the UE will send data information from the first start symbol.

If channel access fails before the first start symbol, the UE will calculate the number of actually available symbols according to the second start symbol and calculate the actual channel coding rate of the TB transmitted starting from the second start symbol. The actual channel coding rate is defined as the number of bits (including CRC bits) of information transmitted via the sidelink divided by the number of bits actually available for mapping on the physical shared channel. For example, the calculated coding rate is 0.99. It is judged whether the actual channel coding rate is higher than or not lower than a configured (or preconfigured) or predefined threshold (which is predefined as 0.95). It is judged that the actual channel coding rate is higher than the predefined threshold of 0.95, therefore, the UE abandons channel access at the second start symbol (symb5) or considers that the second start symbol is invalid. That is, when the actual channel coding rate is not lower than or higher than the threshold, the UE no longer attempts channel access at the second start symbol (symb5).

Example two (Three start symbols are allowed in the resource pool configuration)

The UE receives the resource pool configuration or pre-configuration information and determines allowed start symbols in the slot within the current resource pool and the number of the allowed start symbols. For example, the configuration information in the BWP of the current sidelink indicates that a start symbol for sidelink transmission is symb0 and that the number of symbols is 14. Moreover, a resource pool parameter or a BWP parameter further indicates that the second start symbol is symb4 and that a third start symbol is symb7. The preceding configuration indicates that three start symbols are allowed in the slot within the current resource pool. The first start symbol is symb0, the second start symbol is symb4, and the third start symbol is symb7.

The UE receives the resource scheduling information indicated by the MAC, for example, the MCS and the TB, and performs physical channel processing including CRC calculation and addition, code block partitioning and concatenation, and channel coding such as the LDPC/polar code, and rate matching.

The UE calculates the number of actually available symbols according to the first start symbol and performs the preceding physical channel processing on the sent TB. Moreover, the UE attempts channel access before the first start symbol. If channel access succeeds, the UE will send data information from the first start symbol.

If channel access fails before the first start symbol, the UE will calculate the number of actually available symbols according to the second start symbol and calculate the actual channel coding rate of the TB transmitted starting from the second start symbol (symb4). The actual channel coding rate is defined as the number of bits (including CRC bits) of information transmitted via the sidelink divided by the number of bits actually available for mapping on the physical shared channel. For example, if the calculated coding rate is 0.88, it is judged whether the actual channel coding rate is higher than or not lower than a configured (or preconfigured) or predefined threshold (which is predefined as 0.95). It is judged that the actual channel coding rate is lower than the predefined threshold of 0.95, therefore, the UE attempts channel access at the second start symbol (symb5). If the attempt of channel access succeeds before the second start symbol, the UE will send data information starting from the second start symbol.

If channel access fails before the second start symbol, the UE will calculate the number of actually available symbols according to the third start symbol and calculate the actual channel coding rate of the TB transmitted starting from the third start symbol (symb7). The actual channel coding rate is defined as the number of bits (including CRC bits) of information transmitted via the sidelink divided by the number of bits actually available for mapping on the physical shared channel. For example, if the calculated coding rate is 1.05, it is judged whether the actual channel coding rate is higher than or not lower than a configured (or preconfigured) or predefined threshold (which is predefined as 0.95). It is judged that the actual channel coding rate is higher than the predefined threshold of 0.95. Therefore, the UE abandons channel access at the third start symbol (symb3).

### Embodiment two

In this embodiment, when the actual channel coding rate of the TB transmitted starting from the second start symbol meets the condition corresponding to the threshold, the UE may abandon information or data transmission at the second start symbol.

The UE receives resource pool configuration or pre-configuration information and determines allowed start symbols in the slot within the current resource pool and the number of the allowed start symbols; then the UE receives the MCS and the TB that are indicated by the MAC and performs physical channel processing; moreover, the UE calculates the actual channel coding rate of the TB transmitted starting from the second starting symbol and judges whether the actual channel coding rate is higher than or not lower than a configured (or preconfigured) or predefined threshold. If it is judged that the actual channel coding rate is higher than or not lower than the threshold, the UE will abandon transmission at the current symbol. The MCS includes the modulation order Q. The actual channel coding rate is defined as the number of bits (including CRC bits) of information transmitted via the sidelink divided by the number of bits actually available for mapping on the physical shared channel. The second start symbol is an available start symbol other than the first available symbol in the current slot.

The transmitted information or data includes at least one of: a control message, shared channel information, a feedback message, a broadcast message, a multicast message, or a unicast message.

Example one (Two start symbols are allowed in the resource pool configuration)

The UE receives the resource pool configuration or pre-configuration information and determines allowed start symbols in the slot within the current resource pool and the number of the allowed start symbols. For example, the configuration information in the BWP of the current sidelink indicates that a start symbol for sidelink transmission is symb0 and that the number of symbols is 14. Moreover, a resource pool parameter or a BWP parameter further indicates that the second start symbol is symb5. The preceding configuration indicates that two start symbols are allowed in the slot within the current resource pool. The first start symbol is symb0, and the second start symbol is symb5.

The UE receives the resource scheduling information indicated by the MAC, for example, the MCS and the TB, and performs physical channel processing including CRC calculation and addition, code block partitioning and concatenation, and channel coding such as the LDPC/polar code, and rate matching.

The UE calculates the number of actually available symbols according to the first start symbol and performs the preceding physical channel processing on the sent TB. Moreover, the UE attempts channel access before the first start symbol. If channel access succeeds, the UE will send data information from the first start symbol.

If channel access fails before the first start symbol, the UE will attempt channel access before the second start symbol. The UE calculates the number of actually available symbols according to the second start symbol and calculates the actual channel coding rate of the TB transmitted starting from the second start symbol. The actual channel coding rate is defined as the number of bits (including CRC bits) of information transmitted via the sidelink divided by the number of bits actually available for mapping on the physical shared channel. For example, if the calculated coding rate is 0.99, it is judged whether the actual channel coding rate is higher than or not lower than a configured (or preconfigured) or predefined threshold (which is predefined as 0.95). It is judged that the actual channel coding rate is higher than the predefined threshold of 0.95, therefore, the UE still abandons transmission from the second start symbol (symb5) or considers that the second start symbol is invalid even if the UE successfully attempts channel access before the second start symbol. That is, when the actual channel coding rate is not lower than or higher than the threshold, the second start symbol (symb5) is not available for a start symbol.

Example two (Three start symbols are allowed in the resource pool configuration)

The UE receives the resource pool configuration or pre-configuration information and determines allowed start symbols in the slot within the current resource pool and the number of the allowed start symbols. For example, the configuration information in the BWP of the current sidelink indicates that a start symbol for sidelink transmission is symb0 and that the number of symbols is 14. Moreover, a resource pool parameter or a BWP parameter further indicates that the second start symbol is symb4 and that a third start symbol is symb7. The preceding configuration indicates that three start symbols are allowed in the slot within the current resource pool. The first start symbol is symb0, the second start symbol is symb4, and the third start symbol is symb7.

The UE receives the resource scheduling information indicated by the MAC, for example, the MCS and the TB, and performs physical channel processing including CRC calculation and addition, code block partitioning and concatenation, and channel coding such as the LDPC/polar code, and rate matching.

The UE calculates the number of actually available symbols according to the first start symbol and performs the preceding physical channel processing on the sent TB. Moreover, the UE attempts channel access before the first start symbol. If channel access succeeds, the UE will send data information from the first start symbol.

If channel access fails before the first start symbol, the UE will attempt channel access before the second start symbol. The UE calculates the number of actually available symbols according to the second start symbol and calculates the actual channel coding rate of the TB transmitted starting from the second start symbol (symb4). The actual channel coding rate is defined as the number of bits (including CRC bits) of information transmitted via the sidelink divided by the number of bits actually available for mapping on the physical shared channel. For example, if the calculated coding rate is 0.88, it is judged whether the actual channel coding rate is higher than or not lower than a configured (or preconfigured) or predefined threshold (which is predefined as 0.95). It is judged that the actual channel coding rate is lower than the predefined threshold of 0.95. Therefore, if the UE successfully attempts channel access before the second start symbol, the UE will send data information starting from the second start symbol (symb5).

If channel access fails before the second start symbol, the UE will attempt channel access before the third start symbol. The UE calculates the number of actually available symbols according to the third start symbol and calculates the actual channel coding rate of the TB transmitted starting from the third start symbol (symb7). The actual channel coding rate is defined as the number of bits (including CRC bits) of information transmitted via the sidelink divided by the number of bits actually available for mapping on the physical shared channel. For example, if the calculated coding rate is 1.05, it is judged whether the actual channel coding rate is higher than or not lower than a configured (or preconfigured) or predefined threshold (which is predefined as 0.95). It is judged that the actual channel coding rate is higher than the predefined threshold of 0.95. Therefore, the UE still abandons transmission from the third start symbol (symb7) even if the UE successfully attempts channel access before the third start symbol.

### Embodiment three

In this embodiment, the UE does not expect to access the scheduling not meeting the condition.

The UE receives resource pool configuration or pre-configuration information and determines allowed start symbols in the slot within the current resource pool and the number of the allowed start symbols. The UE does not expect to receive an MAC resource scheduling indication meeting the conditions below.

The UE calculates, based on the MCS and the TB that are indicated by the MAC, the actual channel coding rate of the TB transmitted starting from the second start symbol. The actual channel coding rate is higher than or not lower than a configured (or preconfigured) or predefined threshold.

The MCS includes the modulation order Q. The actual channel coding rate is defined as the number of bits (including CRC bits) of information transmitted via the sidelink divided by the number of bits actually available for mapping on the physical shared channel. The second start symbol is an available start symbol other than the first available symbol in the current slot.

Example one (Two start symbols are allowed in the resource pool configuration)

The UE receives the resource pool configuration or pre-configuration information and determines allowed start symbols in the slot within the current resource pool and the number of the allowed start symbols. For example, the configuration information in the BWP of the current sidelink indicates that a start symbol for sidelink transmission is symb0 and that the number of symbols is 14. Moreover, a resource pool parameter or a BWP parameter further indicates that the second start symbol is symb5. The preceding configuration indicates that two start symbols are allowed in the slot within the current resource pool. The first start symbol is symb0, and the second start symbol is symb5.

The UE does not expect to receive the MAC resource scheduling indication meeting the conditions below.

The UE calculates, based on the MCS and the TB that are indicated by the MAC, the actual channel coding rate of the TB transmitted starting from the second start symbol (symb5). For example, the coding rate is 0.99 obtained through calculation. The actual channel coding rate is higher than or not lower than a configured (or preconfigured) or predefined threshold of 0.95.

Example two (Three start symbols are allowed in the resource pool configuration)

The UE receives the resource pool configuration or pre-configuration information and determines allowed start symbols in the slot within the current resource pool and the number of the allowed start symbols. For example, the configuration information in the BWP of the current sidelink indicates that a start symbol for sidelink transmission is symb0 and that the number of symbols is 14. Moreover, a resource pool parameter or a BWP parameter further indicates that the second start symbol is symb4 and that a third start symbol is symb7. The preceding configuration indicates that three start symbols are allowed in the slot within the current resource pool. The first start symbol is symb0, the second start symbol is symb4, and the third start symbol is symb7.

The UE does not expect to receive the MAC resource scheduling indication meeting the conditions below.

The UE calculates, based on the MCS and the TB that are indicated by the MAC, that the actual channel coding rate of the TB transmitted starting from the second start symbol is 0.88. Alternatively, the actual channel coding rate of the TB transmitted starting from the third start symbol, for example, is 1.02 obtained through calculation. The actual channel coding rate of any start symbol is higher than or not lower than a configured (or preconfigured) or predefined threshold of 0.95.

Embodiments of the present application further provide a transmission apparatus. FIG. 2 is a structure diagram of a transmission apparatus according to an embodiment. As shown in FIG. 2, the transmission apparatus includes a symbol determination module 210, a coding rate calculation module 220, and a transmission module 230.

The symbol determination module 210 is configured to determine target start symbols in a slot within a resource pool, where the target start symbols include a first start symbol and a second start symbol.

The coding rate calculation module 220 is configured to calculate an actual channel coding rate of a transport block (TB) transmitted starting from the second start symbol.

The transmission module 230 is configured to determine transmission at the second start symbol according to the actual channel coding rate and a threshold.

According to the transmission apparatus in this embodiment, before channel access or information transmission, the actual channel coding rate is calculated to determine, according to the threshold, whether to perform channel access and information transmission at the second start symbol, thereby saving radio spectrum resources, reducing the processing complexity and energy consumption of the communications node, and reducing interference in a communications system.

In an embodiment, the actual channel coding rate is defined as the number of bits of information transmitted via a sidelink divided by the number of bits actually available for mapping on a physical shared channel.

In an embodiment, the transmission module 230 is configured to perform the operation below.

In the case where the actual channel coding rate is lower than or not higher than the threshold, determining the transmission at the second start symbol includes performing channel access at the second start symbol.

In an embodiment, the transmission module 230 is configured to perform the operation below.

In the case where the actual channel coding rate is lower than or not higher than the threshold, starting to transmit information from the second start symbol in the case where channel access at the second start symbol succeeds.

In an embodiment, the transmission module 230 is configured to perform the operation below.

In the case where the actual channel coding rate is not lower than or higher than the threshold, abandoning performing channel access at the second start symbol.

In an embodiment, the transmission module 230 is configured to perform the operation below.

In the case where the actual channel coding rate is not lower than or higher than the threshold, abandoning information transmission started from the second start symbol in the case where channel access at the second start symbol succeeds.

In an embodiment, the transmission module 230 is configured to perform the operation below.

In the case where the actual channel coding rate is not lower than or higher than the threshold, invalidating the second start symbol for transmission.

In an embodiment, the apparatus further includes an information receiving module.

The information receiving module is configured to receive the resource scheduling indication information of a medium access control (MAC) layer, where the resource scheduling indication information includes a modulation and coding scheme (MCS) and the TB, and the MCS includes at least one modulation order.

In an embodiment, an actual channel coding rate of the TB transmitted starting from the second start symbol is not expected to be higher than or not lower than the threshold, where the actual channel coding rate corresponds to the MAS and the TB indicated by the resource scheduling indication information.

In an embodiment, the information includes at least one of: a control message, shared channel information, a feedback message, a broadcast message, a multicast message, or a unicast message.

In an embodiment, the actual channel coding rate of the TB transmitted starting from the second start symbol is an actual channel coding rate of the initial transmission of the TB or an actual channel coding rate of the retransmission of the TB.

In an embodiment, the threshold is predefined, preconfigured, configured, or indicated by a system.

In an embodiment, the first start symbol is a first available symbol in the slot.

In an embodiment, the second start symbol is an available start symbol other than a first available symbol in the slot.

The transmission apparatus provided in this embodiment and the transmission method provided in the preceding embodiments belong to the same concept. For technical details not described in detail in this embodiment, reference may be made to any one of the preceding embodiments, and this embodiment has the same beneficial effects as the performed transmission method.

Embodiments of the present application further provide a communication node. FIG. 3 is a structure diagram of a hardware of a communication node according to an embodiment. As shown in FIG. 3, the communication node provided in the present application includes a processor 310 and a memory 320. One or more processors 310 may be provided in the communication node. In FIG. 3, one processor 310 is used as an example. The memory 320 is configured to store one or more programs. The one or more programs are executed by the one or more processors 310 to cause the one or more processors 310 to perform the transmission method provided in embodiments of the present application.

The communication node further includes a communication apparatus 330, an input apparatus 340, and an output apparatus 350.

The processor 310, the memory 320, the communication apparatus 330, the input apparatus 340, and the output apparatus 55 in the communication node may be connected through a bus or in other manners, and the connection through the bus is used as an example in FIG. 3.

The input apparatus 340 may be configured to receive inputted digital or character information and generate key signal input related to user settings and function control of the communication node. The output apparatus 350 may include a display device, for example, a display screen.

The communication apparatus 330 may include a receiver and a sender. The communication apparatus 330 is configured to perform information transceiving and communication under the control of the one or more processors 310.

As a computer-readable storage medium, the memory 320 may be configured to store software programs, computer-executable programs and modules, such as program instructions/modules (for example, the symbol determination module 210, the coding rate calculation module 220, and the transmission module 230 that are in the transmission apparatus) corresponding to the transmission method according to embodiments of the present application. The memory 320 may include a program storage region and a data storage region, where the program storage region may store an operating system and an application program required by at least one function, and the data storage region may store data or the like created according to the use of the communication node. Additionally, the memory 320 may include a high-speed random-access memory and may further include a non-volatile memory, for example, at least one magnetic disk memory, a flash memory, or another non-volatile solid-state memory. In some examples, the memory 320 may further include memories located remotely relative to the processors 310, and these remote memories may be connected to the communication node via a network. Examples of the preceding network include, but are not limited to, the Internet, an intranet, a local area network, a mobile communication network, and a combination thereof.

Embodiments of the present application further provide a storage medium for storing a computer program. When the computer program is executed by a processor, the transmission method according to any embodiment of the present application is performed. The method includes the following: Target start symbols in a slot within a resource pool are determined, where the target start symbols include a first start symbol and a second start symbol; an actual channel coding rate of a transport block (TB) transmitted starting from the second start symbol is calculated; and transmission at the second start symbol is determined according to the actual channel coding rate and a threshold.

A computer storage medium in embodiments of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device, or any combination thereof. More specific examples of the computer-readable storage medium include (non-exhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical storage element, a magnetic storage device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

The program codes included on the computer-readable medium may be transmitted on any suitable medium including, but not limited to, a wireless medium, a wire, an optical cable, a radio frequency (RF), or any suitable combination thereof.

Computer program codes for performing the operations of the present application may be written in one or more programming languages or a combination of multiple programming languages. The programming languages include object-oriented programming languages such as Java, Smalltalk, and C++ and may further include conventional procedural programming languages such as "C" or similar programming languages. The program codes may be executed entirely on a user computer, executed partly on a user computer, executed as a stand-alone software package, executed partly on a user computer and partly on a remote computer, or executed entirely on a remote computer or a server. In the case related to the remote computer, the remote computer may be connected to the user computer via any type of network including a local area network (LAN) or a wide area network (WAN) or may be connected to an external computer (for example, via the Internet through an Internet service provider).

The preceding are example embodiments of the present application and are not intended to limit the scope of the present application.

It is to be understood by those skilled in the art that the term "user equipment" encompasses any suitable type of radio user device, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM) and an optical memory device and system (a digital video disc (DVD) or a compact disk (CD)). The computer-readable medium may include a non-transitory storage medium. The data processor may be of any type suitable for the local technical environment, such as, but not limited to, a general-purpose computer, a special-purpose computer, a microprocessor, a digital signal processor (DSP), an application specific integrated circuit (ASIC), a field-programmable gate array (FPGA) and a processor based on a multi-core processor architecture.

The detailed description of example embodiments of the present application is provided above through exemplary and non-restrictive examples. However, considering the drawings and the claims, various modifications and adjustments to the preceding embodiments are apparent to those skilled in the art and do not deviate from the scope of the present application. Accordingly, the proper scope of the present application is determined according to the claims.

## Claims

1. A transmission method, comprising:
determining target start symbols in a slot within a resource pool, wherein the target start symbols comprise a first start symbol and a second start symbol;
calculating an actual channel coding rate of a transport block, TB, in a case where the TB is transmitted starting from the second start symbol; and
determining transmission at the second start symbol according to the actual channel coding rate and a threshold.

2. The transmission method according to claim 1, wherein the actual channel coding rate is defined as a number of bits of information transmitted via a sidelink divided by a number of bits actually available for mapping on a physical shared channel.

3. The transmission method according to claim 1, wherein determining the transmission at the second start symbol according to the actual channel coding rate and the threshold comprises:
in a case where the actual channel coding rate is lower than or not higher than the threshold, performing channel access at the second start symbol.

4. The transmission method according to claim 1 or 3, wherein determining the transmission at the second start symbol according to the actual channel coding rate and the threshold comprises:
in a case where the actual channel coding rate is lower than or not higher than the threshold, starting to transmit information from the second start symbol in a case where channel access at the second start symbol succeeds.

5. The transmission method according to claim 1, wherein determining the transmission at the second start symbol according to the actual channel coding rate and the threshold comprises the following:
in a case where the actual channel coding rate is not lower than or higher than the threshold, abandoning performing channel access at the second start symbol.

6. The transmission method according to claim 1 or 5, wherein determining the transmission at the second start symbol according to the actual channel coding rate and the threshold comprises:
in a case where the actual channel coding rate is not lower than or higher than the threshold, abandoning information transmission from the second start symbol in a case where channel access at the second start symbol succeeds.

7. The transmission method according to claim 1, wherein determining the transmission at the second start symbol according to the actual channel coding rate and the threshold comprises the following:
in a case where the actual channel coding rate is not lower than or higher than the threshold, invalidating the second start symbol for transmission.

8. The transmission method according to claim 1, further comprising:
receiving resource scheduling indication information of a medium access control, MAC, layer, wherein the resource scheduling indication information comprises a modulation and coding scheme, MCS, and the TB, and the MCS comprises at least one modulation order.

9. The transmission method according to claim 8, wherein an actual channel coding rate of the TB transmitted starting from the second start symbol is not expected to be higher than or not lower than the threshold, wherein the actual channel coding rate corresponds to the MAS and the TB indicated by the resource scheduling indication information.

10. The transmission method according to claim 2 or 3 or 5, wherein the information comprises at least one of: a control message, shared channel information, a feedback message, a broadcast message, a multicast message, or a unicast message.

11. The transmission method according to claim 1, wherein the actual channel coding rate of the TB transmitted starting from the second start symbol is an actual channel coding rate of initial transmission of the TB or an actual channel coding rate of retransmission of the TB.

12. The transmission method according to claim 1, wherein the threshold is predefined, preconfigured, configured, or indicated by a system.

13. The transmission method according to claim 1, wherein the first start symbol is a first available symbol in the slot.

14. The transmission method according to claim 1, wherein the second start symbol is an available start symbol other than a first available symbol in the slot.

15. A communication node, comprising a memory and at least one processor, wherein
the memory is configured to store at least one program; and
wherein when executed by the at least one processor, the at least one program causes the at least one processor to perform the transmission method according to any one of claims 1 to 14.

16. A computer-readable storage medium for storing a computer program, wherein when executed by a processor, the program causes the processor to perform the transmission method according to any one of claims 1 to 14.
